Europäisches Patentamt

European Patent Office

Office européen des brevets

(11) Publication number: **0 023 436**
**A1**

## (12) EUROPEAN PATENT APPLICATION

(21) Application number: **80400677.3**

(22) Date of filing: **14.05.80**

(51) Int. Cl.³: **G 02 B 7/26**

(30) Priority: **25.07.79 US 60446**

(43) Date of publication of application:
**04.02.81 Bulletin 81/5**

(84) Designated Contracting States:
**DE FR GB IT**

(71) Applicant: **THE BENDIX CORPORATION**
**Executive Offices Bendix Center**
**Southfield, Michigan 48037(US)**

(72) Inventor: **Marsh, Edward K.**
**12 Concord St.**
**Sidney, New-York 13838(US)**

(74) Representative: **Maguet, André et al,**
**Service Brevets Bendix 44, Rue François 1er**
**F-75008 Paris(FR)**

(54) **Connector for a pair of optic fiber cables.**

(57) Connector for a pair of optic fiber cables (12, 14) which comprises: an elastomeric body (50) with a central bore (56) for receiving a pair of optical fibers (16, 20) and for holding them in alignment by compressing the elastomeric body (50); first connector body (24) including a tapered split sleeve (34,36) in which is disposed the elastomeric body (50); a second connector body (26) defining a tapered socket (82) adapted to receive the tapered and (36) of the split sleeve (34,36); a coupling nut (28) for coupling the connector bodies (24,26) together, which coupling nut (28), when tightened, compressing the elastomeric body (50) and causing it to engage the optical fibers (16, 20) and holding them in accurate alignment, each of the connector bodies (24,26) being provided with a compression fitting (30;32) which is tightened against the respective cables (12;14) to hold it in fixed position.

EP 0 023 436 A1

./...

_Fig-1_

## Connector for a pair of optic fiber cables

This invention relates to a connector for a pair of optic fiber cables each having an optic fiber and a sheath thereon with the fiber extending beyond one end of the sheath, comprising: a first connector body adapted to receive the end of one of the cables with the fiber extending therethrough; a second connector body adapted to receive the end of the other of the cables with the fiber extending therethrough; and means for coupling the first and second connector bodies together.

In optical systems using fiber optics for transmitting signals by light energy, it is often necessary to couple two fibers end-to-end for the signal transmission path. The optical fibers are of very small diameter and are of fragile construction. Typically, a fiber optic cable comprises an optical fiber embedded in a cylindrical sheath of plastic material for protecting the fiber from damage due to handling during installation and exposure in its operating environment. A typical single filament cable comprises a glass fiber of 13/100mm of diameter and a sheath of 1.8 mm of diameter. In order to minimize the coupling losses at the interface of the two optical fibers, ends of the fibers must be accurately aligned. Further, the cable sheath must be supported to relieve the fiber from stress, i.e. to provide so-called strain relief.

In the prior art, fiber optic cables have been connected together by means of a plug and receptacle type of connector as shown in U.S. Patent 4,009,931. The connector of this patent is adapted for coupling one bundle of optical fibers to another in an end-to-end relationship. For this purpose, a plastic ferrule is fitted on the end of each bundle of fibers. One ferrule is mounted in a receptacle and the other is mounted in a plug. The plug and receptacle are held together with the ends of the ferrules in abutting relationship.

Also in the prior art, single filament, fiber optic cables are coupled in end-to-end relationship by

attaching a ferrule to the end of the single filament or fiber and mechanically aligning and connecting the ferrules together. In U.S. Patent 4,087,158, the ferrule comprises small diameter tubing bonded to the fiber with a tapered metal sleeve over the tubing and with the optical fiber end being flush with the end of the ferrule. A pair of optical fibers are coupled by mounting the respective ferrules in a connector body with the pair of fibers in end-to-end relationship with a small space therebetween. In U.S. Patent 4,090,778, a single optical fiber is terminated by means of a tubular ferrule with a watch jewel at one end. The ferrule receives the sheath of a fiber optic cable and the fiber extends through the watch jewel. The ferrule of one optical fiber is mounted in a first connector member and the ferrule of another optical fiber is mounted in a second connector member and the connector members are mated together with the ferrules in abutting end-to-end relationship. The connector body may be provided with a rubber insert having a bore adapted to receive the ferrules. The British Patent 1,448,975 discloses an arrangement for joining a pair of optical fibers wherein the fibers are inserted into opposite ends of a bore in a metal sleeve.

The present invention overcomes the disadvantages and limitations of the prior art connectors by providing a connector for a pair of optic fiber cables each having an optical fiber and a sheath thereon with the fiber extending beyond one end of the sheath, comprising: a first connector body adapted to receive the end of one of the cables with the fiber extending therethrough; a second connector body adapted to receive the end of the other of the cables with the fiber extending therethrough; a device for coupling the first and second connector bodies together; an elastomeric body defining a bore through this body for receiving the optical fibers in opposed end-to-end relationship, the elastomeric body being disposed between the first and second connector bodies; and an arrangement for compressing the elastomeric body whereby the optical fibers are held in alignment.

In accordance with this invention, the optical fibers are coupled together by the connector which holds the fibers in accurate alignment and which protects the fibers from damage. In addition, the connector is easy to install and is of simple, inexpensive construction.

One way of carrying out the invention is described in detail below with reference to the drawings which illustrate one specific embodiment, in which:

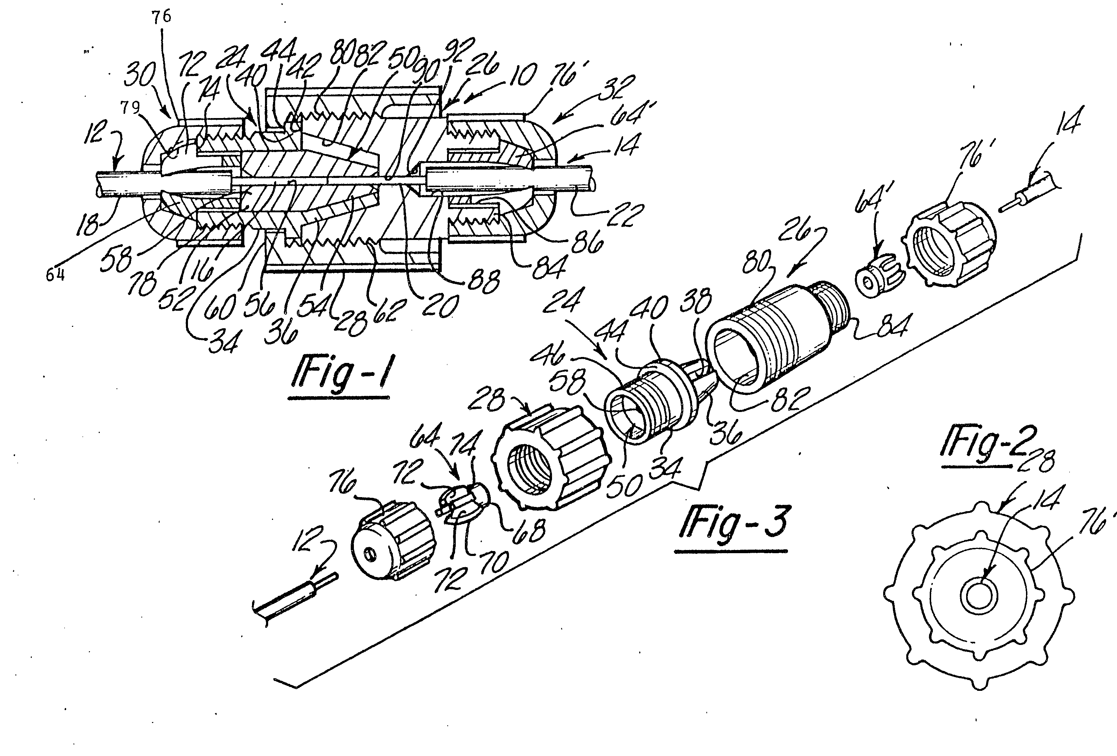

FIGURE 1 is a sectional view of the fiber optic cable connector of this invention;

FIGURE 2 is an end view of the connector of FIGURE 1; and

FIGURE 3 is an exploded view of the connector shown in FIGURE 1.

Referring now to the drawings, there is shown an illustrative embodiment of the invention in a connector especially adapted for optic fiber cables having a single filament or fiber. It will be appreciated as the description proceeds, that the invention is also useful to other applications including connectors for fiber optic cables having a bundle of fibers.

The connector 10 is adapted to join a fiber optic cable 12 with a fiber optic cable 14. The cable 12 comprises a single fiber 16 and a cable sheath 18. The cable 14 comprises a fiber 20 and a cable sheath 22. The connector 10 is adapted to hold the fibers 16 and 20 in accurate alignment while supporting the cables 12 and 14 by the respective cable sheaths 18 and 22 to provide strain relief so that the fibers 16 and 20 are not unduly stressed.

The connector 10 comprises a first connector body 24 which receives the cable 12 and a second connector body 26 which receives the cable 14. The connector bodies 24 and 26 are connected together by a coupling nut 28 in a manner that will be described below. The connector body 24 is provided with means comprising a compression fitting 30 for securing the cable sheath 18 to the connector body 24. Similarly, the connector body 26 is provided with a compression fitting 32 for securing the cable sheath 22 to the connector body 26.

The connector body 24 comprises a sleeve having a cylindrical portion 34 and a tapered nose portion 36. The tapered nose portion is split in the axial direction and defines a slot 38 whereby the nose portion tends to be collapsible in the radial direction. The connector body 24 is provided with an annular flange 40 which defines a seating surface 42 and an annular shoulder 44 for purposes to be described below. The connector body 24 is also provided with screw threads 46 on the cylindrical portion 34.

An elastomeric body 50 is adapted to receive the optical fibers 16 and 20 and provide alignment of the fibers within the connector body 24. The elastomeric body 50 has a cylindrical portion 52 at one end and a conical or tapered portion 54 at the other end. The elastomeric body defines a bore 56 which extends through the body and which is cylindrical in cross section and of sufficient diameter to provide a clearance fit for the optical fibers when the elastomeric body is in a relaxed state. The bore 56 is of substantially uniform diameter except for a flared portion 58 at the both ends of the body to facilitate entrance of the fibers 16 and 20. The elastomeric body 50 is disposed within the connector body 24 and the tapered portion 54 thereof conforms substantially to the configuration of the nose portion 36 of the connector body while the cylindrical portion 52 fits within the cylindrical portion 34 of the connector body. The elastomeric body 50 is made of soft rubber, preferably a silicone rubber. It is sufficiently pliable so that it may be deformed inwardly by radially acting forces to reduce the size of the bore, in a manner which will be described below.

The coupling nut 28 is rotatably supported on the connector body 24. The nut 28 is a cylindrical sleeve provided at its rearward end with an annular flange 60 which engages the shoulder 44 on the flange 40 of the connector body 24. The coupling nut 28 is provided with internal screw threads 62 for connection with the connector body 26.

The connector body 24 supports the compression fitting 30 for securing the cable 12 to the connector body 24. The compression fitting 30 comprises a compression bushing 64 which is adapted to be compressed in a radial direction to grip the cable sheath 18. For this purpose, the bushing 64 comprises a cylindrical collar 68 and an enlarged head 70. The head comprises a plurality of circumferentially spaced wedge-shaped fingers 72 which are adapted to flex inwardly to engage the cable sheath. The fingers 72 have an inner surface which is substantially parallel to the axis of the bushing and have an outer surface which is tapered outwardly from a relatively small radial thickness at the ends of the fingers to a radial shoulder of larger radial thickness near the collar 68. The bushing 64 has an inside diameter which accommodates the diameter of the cable sheath 18 in a loose fit when the fingers 72 are in an undeflected state. The shoulder 74 of the fingers is adapted to seat against the end of the connector body 24. A compression nut 76 is provided with a screw thread 78 adapted to engage the screw thread 46 on the connector body 24. The nut 76 is also provided with an annular seat 79 of tapered radius which is adapted to receive the fingers 72 of the bushing 64 in nested relationship. When the compression nut 76 is tightened onto the screw threads of the connector body 24 the fingers 72 of the bushing 64 are deflected inwardly by engagement with the nut and the fingers are pressed into engagement with the cable sheath 18 and constrain it against movement relative to the connector body 24.

The connector body 26 is cylindrical and is provided with external screw threads 80 at the forward end for engagement with the screw threads of the coupling nut 28. Also at the forward end, the connector body 26 is provided with an axially extending socket 82 of conical configuration adapted to receive, in mating relationship, the tapered nose portion 36 of the connector body 24. The rear portion of the connector body 26 comprises a threaded boss 84 which is adapted to receive the compression fitting 32. The compression fitting 32 comprises a compression bushing 64' and a compression nut 76' which are identical in construction to the compression bushing 64 and nut 76 described above. It is noted that the boss 84 on the connector body 26 includes a cylindrical recess 86 adapted to receive the cylindrical collar of the bushing 64' with the head thereof seated against the end of the boss. The connector body 26 is also provided with a recess 88 of reduced diameter at the bottom of the cylindrical recess 86 to receive the cable sheath 22. An axial bore 90 of small diameter extends from the bottom of the recess 88 to the socket 50. The bore 90 receives the optical fiber 20 in a loose fit and is of uniform diameter except for a flared opening 92 at the rear end to facilitate entrance of the fiber. With the cable 14 inserted into the connector body 26 and the optical fiber 20 extending into the socket 82, the compression fitting 32 is tightened to hold the cable in fixed position relative to the connector body 26.

It will be appreciated that all the parts of the connector 10, except for the elastomeric body 50, may be made of either metal or molded plastic.

In using the connector 10, the cables 12 and 14 are prepared by stripping the cable sheath from a suitable length of the fibers 16 and 20, respectively, leaving the bare fibers extending beyond the ends of the sheaths. With the coupling nut 28 completely unscrewed from the connector body 26, the cable 12 is inserted into the rear of the connector body 24 through the compression fitting 30. The fiber 16 enters the bore 56 of the elastomeric body 50 in a clearance fit. The inner end of the fiber 16 should extend a first predetermined distance beyond the seating surface 42 of the connector body 24. This first predetermined distance is suitably measured by a depth gage having a probe extending into the bore 56 from the inner end thereof. With the fiber 16 accurately located within the connector body 24, the compression nut 76 is tightened so that the compression bushing 64 securely fastens the cable sheath to the connector body. Next, the cable 14 is inserted into the rear of the connector body 26 through the compression fitting 32. The optical fiber 20 passes through the axial bore 90 and extends into the socket 82 with the end of the fiber 20 positioned a predetermined distance from the inner end of the connector body 26. The second predetermined distance may be measured by a suitable depth gage seated on the inner end of the body and having the probe for engagement with the inner end of the fiber. With the fiber 20 properly positioned, the compression nut 76' is tightened so that the cable 14 is securely held in the connector body 26. Next, the connector body 26 and the coupling nut 28 are brought together so that the end of the optical fiber 20 enters the open end of the elastomeric body 50. The screw threads 62 of the coupling nut 28 are engaged with the screw threads 80 of the connector body 26 and the coupling nut is tightened thereon. This draws the connector body 26 and the connector body 24 together with the tapered nose 36 in the socket 82. As the coupling nut is progressively tightened, the tapered nose 36 is radially compressed and consequently the diameter of the bore 56 is reduced and the elastomeric body engages the optical fibers 16 and 20 and holds them in end-to-end alignment. A positioning of the fibers relative to the respective connector bodies is such that there is a small space therebetween when the coupling nut 28 is fully tightened and the seating surface 42 of the connector body 24 seated against the inner end of the connector body 26. Thus, with the connector assembled as described, the optical fibers 16 and 20 are held in accurate alignment and are protected from damage by the connector. If desired, a small quantity of optical coupling fluid may be inserted into the bore 56 of the elastomeric body before the optical fiber 20 is inserted. The elastomeric body will provide a fluid tight seal in its compressed state. The compression fittings 30 and 32 retain the cable 12 and 14 in position relative to the connector and provide strain relief for the cable.

Claims:

1. Connector for a pair of optic fiber cables (12,14) each having an optical fiber (16;20) and a sheath (18;22) thereon with the fiber (16;20) extending beyond one end of the sheath (18;22), comprising: a first connector body (24) adapted to receive the end of one (12) of said cables (12,14) with the fiber (16) extending therethrough; a second connector body (26) adapted to receive the end of the other (14) of said cables (12,14) with the fiber (20) extending therethrough; and means (28) for coupling the first and second connector bodies (24,26) together; characterized in that there are provided: an elastomeric body(50) defining a bore(56)through said body(50)for receiving the optical fibers(16,20)in opposed end-to-end relationship, said elastomeric body(50)being disposed between the first and second connector bodies (24,26); and means (36,82) for compressing the elastomeric body(50)whereby the optical fibers (16,20) are held in alignment.

2. Connector as claimed in claim 1, characterized in that there are provided means (30) for securing the sheath (18) of said one cable (12) to the first connector body (24) and means (32) for securing the sheath (22) of said other cable (14) to the second connector body (26).

3. Connector as claimed in claim 1, characterized in that the first connector body (24) is provided with an annular shoulder (44) and the second connector body (26) is provided with a first screwthread element (80), and in that said means (28) for coupling comprises a coupling nut (28) having a flange (60) adapted to engage said shoulder (44) and having a second screwthread element (62) adapted to engage said first screwthread element (80).

4. Connector as claimed in claim 1, characterized in that said means for compressing (36,82) comprises: a tapered socket (82) defined by said second connector body (26); and a sleeve (34,36) defined by said first connector body (24) and having a tapered end (36) adapted to mate with said socket (82), said tapered end (36) being split and receiving the elastomeric body (50) therein, whereby said elastomeric body (50) is compressed when said tapered end (36) is forced into said socket (82).

5. Connector as claimed in claim 2, characterized in that each of said means for securing (30,32) comprises: a compression nut (76;76') having an opening adapted to allow the respective cable (12;14) to extend therethrough; and a compression bushing (64;64') nested within said compression nut (76;76') and disposed over the respective cable sheath (18;22), said compression nut (76;76') being threadedly engagable with the respective connector body (24;26) whereby tightening of the compression nut (76;76') is operative to compress said compression bushing (64;64') against the respective cable sheath (18;22) and constrain said cable (12; 14) from displacement relative to the respective connector body (24;26).

6. Connector as claimed in claim 5, characterized in that said compression bushing (64;64') comprises a collar (68) having a plurality of wedge-shaped fingers (72) yieldably connected therewith, and said compression nut (76;76') comprises a cam-shaped surface (79) for engaging said fingers (72).

0023436

1/1

Fig-1

Fig-2

Fig-3

European Patent Office

**EUROPEAN SEARCH REPORT**

Application number

EP 80 40 0677

| | DOCUMENTS CONSIDERED TO BE RELEVANT | | CLASSIFICATION OF THE APPLICATION (Int Cl.³) |
|---|---|---|---|
| Category | Citation of document with indication, where appropriate, of relevant passages | Relevant to claim | G 02 B 7/26 |
| | FR - A - 2 291 512 (LABS. D'ELEC-TRONIQUE ET DE PHYSIQUE AP-PLIQUEE I.E.P.) <br><br> * Pages 3-4; figure 1 * | 1 | |
| | FR - A - 2 356 060 (STE. NOUVELLE DE CONNEXION) <br><br> * Page 7; figure 4 * | 1 | |

**TECHNICAL FIELDS SEARCHED (Int. Cl.³)**

G 02 B 7/26

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 21-10-1980 | MALIC |

EPO Form 1503.1  06.78